# EUROPEAN PATENT APPLICATION

(11) **EP 1 580 473 A1**
(43) Date of publication of application: **28.09.2005**
(21) Application number: 03775842.2
(22) Date of filing: 19.11.2003
(51) Int. Cl.: F16L 11/04, F16L 11/127

(54) **MULTILAYER TUBE**

(30) Priority: 21.11.2002 JP 2002338173
(71) Applicant: Sanoh Kogyo Kabushiki Kaisha, Ibaraki-ken 306-0023 (JP)
(72) Inventor: SATO, Masatomi, c/o Sanoh Kogyo Kabushiki Kaisha, Koga-shi, Ibaraki 306-0041 (JP)
(74) Representative: HOFFMANN EITLE
(86) International application number: PCT/JP2003/014728
(87) International publication number: WO 2004/046600

(57) **Abstract**

A laminated tube has an exceedingly high permeation inhibiting ability unparalleled by conventional laminated tubes. The laminated tube is a laminated structure consisting of a plurality of thermoplastic resin layers. The two or more layers among the plurality of layers are low-permeability layers formed respectively of different low-permeability resins.

## Description

### TECHNICAL FIELD

The present invention relates to a laminated tube to be used as a fuel line on an automobile and, more particularly, to a laminated tube having a remarkably improved impermeability to fuel.

### BACKGROUND ART

Metal tubes coated with a plated film or a resin film have been generally used as fuel lines on automobiles. The corrosion resistance and chemical resistance of metal tubes have been enhanced through the improvement of coating materials and the construction of coating films.

Recently, resin tubes have been prevalently used as fuel lines as well as metal tubes. Resin tubes have many advantages; resin tubes are rustproof while metal tubes are subject to rusting, are easy to process, increase the degree of freedom of design and are lightweight.

The low impermeability to gasoline of resin tubes is the most significant problem that arises when resin tubes are used as fuel lines.

A laminated tube included in conventional laminated resin tubes has the innermost layer, which is exposed to gasoline, formed of a resin having a high permeation inhibiting ability, and the outermost layer formed of a polyamide resin and adhesively bonded to the inner layer.

Regulations on the fuel impermeability of fuel lines have been tightened up in recent years in Europe and America to deal with environmental problems, and the fuel impermeability of the conventional laminated tubes is not high enough to satisfy conditions required by the regulations. Thus the development of resin tubes having a high permeation inhibiting ability meeting the regulations is a pressing need in recent years.

### DISCLOSURE OF THE INVENTION

Accordingly, it is an object of the present invention to solve problems in the prior art and to provide a laminated tube having an exceedingly high permeation inhibiting ability unparalleled by those of conventional laminated tubes.

A laminated tube in a first aspect of the present invention includes a plurality of resin layers respectively formed of thermoplastic resins, wherein the two or more resin layers among the plurality of resin layers are low-permeability resin layers formed respectively of different low-permeability resins.

A laminated tube in a second aspect of the present invention includes a plurality of thin resin layers respectively formed of thermoplastic resins, wherein the two or more resin layers among the plurality of resin layers are low-permeability resin layers, and the thermoplastic resin forming one of the two or more low-permeability resin layers is an ethylene tetrafluoroethylene resin (ETFE resin), a liquid crystallized polymer (LCP), a polyphenylene sulfide resin (PPS resin), an ethylene-vinyl alcohol resin (EVOH resin) or a polybutylene naphthalate resin (PBN resin).

A laminated tube in a third aspect of the present invention includes a plurality of resin layers respectively formed of thermoplastic resins, wherein the two resin layers are low-permeability resin layers, and the two low-permeability resin layers are:
a) a low-permeability resin layer of an ethylene tetrafluoroethylene resin (ETFE resin), and a low-permeability resin layer of an ethylene-vinyl alcohol resin (EVOH resin),
b) a low-permeability resin layer of an ethylene tetrafluoroethylene resin (ETFE resin) and a low-permeability resin layer of a polyphenylene sulfide resin (PPS resin),
c) a low-permeability resin layer of a liquid crystallized polymer (LCP) and a low-permeability resin layer of an ethylene tetrafluoroethylene resin (ETFE resin),
d) a low-permeability resin layer of a polybutylene naphthalate resin (PBN resin) and a low-permeability resin layer of an ethylene tetrafluoroethylene resin (ETFE resin) or
e) a low-permeability resin layer of a polybutylene naphthalate resin (PBN resin) and a low-permeability resin layer of a polyphenylene sulfide resin (PPS resin).

### BRIEF DESCRIPTION OF THE DRAWINGS

Fig. 1 is a cross-sectional view of a laminated tube in a first embodiment according to the present invention;
Fig. 2 is a cross-sectional view of a laminated tube in a modification of the laminated tube in the first embodiment;
Fig. 3 is a cross-sectional view of a laminated tube in a second embodiment according to the present invention;
Fig. 4 is a cross-sectional view of a laminated tube in a modification of the laminated tube in the second embodiment; and
Fig. 5 is a table showing results of permeability tests of laminated tubes embodying the present invention.

### BEST MODE FOR CARRYING OUT THE INVENTION

Laminated tubes embodying the present invention will be described with reference to the accompanying drawings.

### First Embodiment

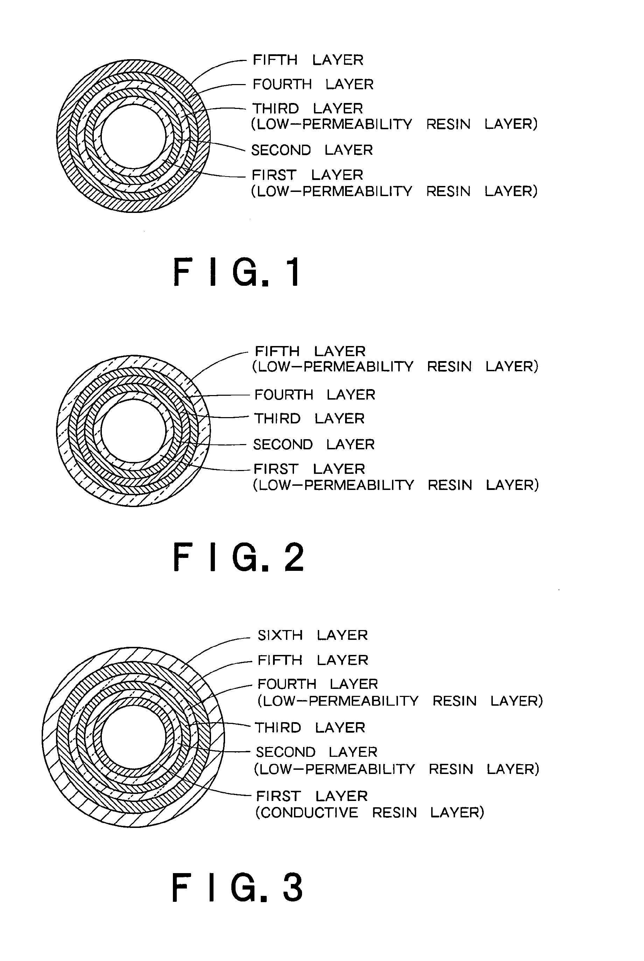

Fig. 1 shows a laminated tube in a first embodiment according to the present invention in a cross-sectional view. This laminated tube is a five-layer laminated tube having five resin layers. A first layer, namely, the innermost layer to be exposed to fuel, and a third layer are low-permeability layers formed respectively of thermoplastic resins having high permeation inhibiting ability. The first and the third layer are bonded together by a second layer, namely, an adhesive layer. A fifth layer, namely, the outermost layer, which does not need necessarily to be formed of a thermoplastic resin having a high permeation inhibiting ability, is formed of a polyamide resin. The five-layer laminated tube is formed by a coextrusion molding process.

Suitable thermoplastic resins for forming low-permeability layers are ethylene tetrafluoroethylene resins (ETFE resins), liquid crystallized polymers (LCPs), polyphenylene sulfide resins (PPS resins), ethylene-vinyl alcohol resins (EVOH resins), polybutylene naphthalate resins (PBN resins) and polyvinylidene fluoride resins (PVDF resins).

The first and the third layers are formed of different low-permeability resins, respectively. For example, the first layer is formed of an ethylene tetrafluoroethylene resin (ETFE resin) having a very low permeability to regular gasoline and the third layer is formed of an ethylene-vinyl alcohol resin (EVOH resin) having a very low permeability to alcohol-blended gasoline.

A resin containing a liquid crystallized polymer (LCP) as a principal component is prepared by mixing LCP powder in PA 11m PA 12, an ETFE resin, a PPS resin, a PBN resin, an EVOH resin or the line. The temperature of this resin can be easily controlled during coextrusion. Since the LCP, as compared with other resins, has a very high melting point, the control of the temperature of the LCP during coextrusion is difficult. Use of the LCP powder is effective to overcome such a difficulty.

A mixed low-permeability resin prepared by mixing powder of an ETFE resin, a PPS resin, a PBN resin or an EVOH resin instead of powder of a LCP in an optional thermoplastic resin may be used instead of the foregoing resin containing powder of a LCP.

Fig. 2 shows a five-layer laminated tube in a cross-sectional view. A first layer, namely, the innermost layer, and a fifth layer, namely, the outermost layer, are formed of different low-permeability thermoplastic resins, respectively. A third layer may be formed of a resin not having a low permeability. A second layer and a fourth layer are adhesive layers.

Either the third or the fifth layer may be formed of a low-permeability thermoplastic resin, provided that the first layer is formed of a low-permeability resin.

The first layer may be formed of a material prepared by mixing a conducting filler, such as carbon, in a low-permeability thermoplastic resin to provide the first layer with both a low permeability and conductivity. Static electricity generated by friction between fuel and the first layer can be discharged through the inner layer.

When the first layer is conducting, the fifth layer, namely, the low-permeability layer, is not formed of a conducting material. The fifth layer compensates for increase in the permeability of the first layer due to giving the first layer conductivity to limit the effect of giving the first layer conductivity to the least extent on increase in the overall permeability of the laminated tube to the least extent.

### Second Embodiment

Fig. 3 shows a laminated tube in a second embodiment according to the present invention in a cross-sectional view. This laminated tube is a six-layer laminated tube having six resin layers.

A first layer, namely, the innermost layer, is formed of a mixed, conducting resin prepared by mixing a filler, such as carbon, in a thermoplastic resin not having a low permeability, such as a polyamide resin. A second layer and a fourth layer are low-permeability layers formed of low-permeability thermoplastic resins. A third layer and a fifth layer are adhesive layers. A sixth layer, namely, the outermost layer, is formed of a polyamide resin, which is not a thermoplastic resin having a low permeability. This six-layer laminated tube is formed by a coextrusion molding process. The second and the fourth layer are formed of different low-permeability resins, respectively.

Suitable thermoplastic resins for forming the low-permeability layers are ethylene tetrafluoroethylene resins (ETFE resins), liquid crystallized polymers (LCPs), polyphenylene sulfide resins (PPS resins), polybutylene naphthalate resins (PBN resins) and polyvinylidene fluoride resins (PVDF resins).

The low-permeability layer may be formed of either one of those thermoplastic resins for forming the low-permeability layers and a mixture of powder of one of those thermoplastic resins and another one of those thermoplastic resins.

In this laminated tube, the first layer is conducting and capable of discharging static electricity, and the second and the fourth layer are low-permeability layers respectively having different low permeabilities.

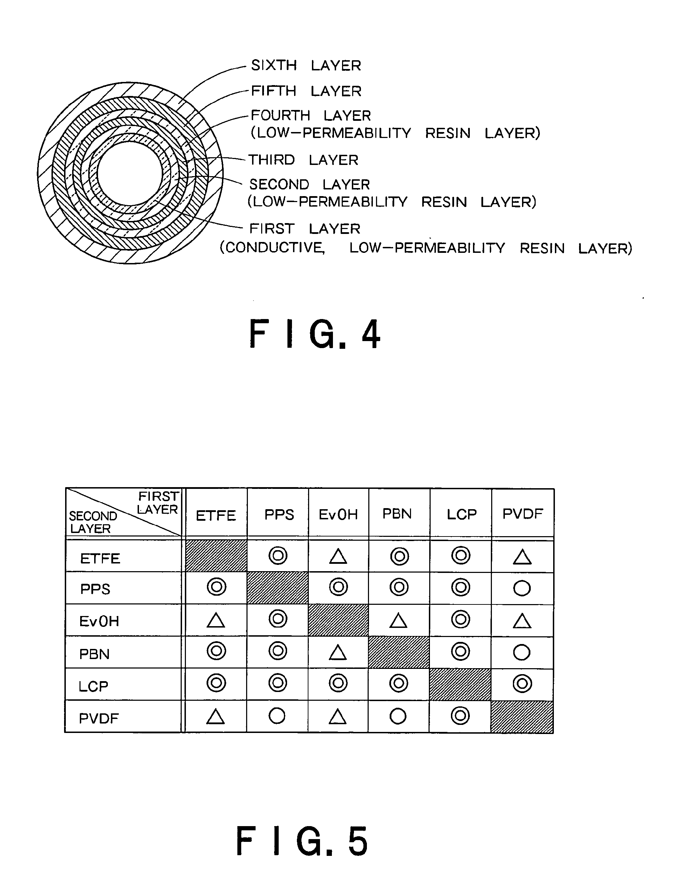

Fig. 4 is a cross-sectional view of a six-layer laminated tube in a modification of the laminated tube in the second embodiment. This laminated tube is similar to that shown in Fig. 3, except that this laminated tube has a first layer, namely, the innermost layer, formed of a mixed, conducting resin prepared by mixing a filler, such as carbon, in a low-permeability thermoplastic resin. This laminated tube has both conductivity and a high permeation inhibiting ability, as compared with the laminated tube shown in Fig. 3.

### Examples

Examples of the laminated tube in the second embodiment shown in Fig. 3 will be explained. Materials shown in Fig. 5 were used in combination for forming the second and the fourth layer, namely, the low-permeability layers.

Each of laminated tubes in examples had an inside diameter of 6.0 mm, a first layer of a polyamide resin of 0.2 mm in thickness, a second layer of 0.1 mm in thickness, a third layer, namely, an adhesive layer, of 0.1 mm in thickness, a fourth layer of 0.2 mm in thickness, a fifth layer, namely, an adhesive layer, of 0.1 mm in thickness and a sixth layer of a polyamide resin having a thickness of 0.3 mm.

Regular gasoline and alcohol-blended gasoline were used as test liquids for testing the impermeability of the laminated tubes. The laminated tubes were subjected to a fuel-permeability test specified in CARB DEL. Double circles, circles and triangles indicate evaluated levels of impermeability of the laminated tubes.

Double circles indicate excellent permeation inhibiting ability to inhibit the permeation of both the regular gasoline and the alcohol-blended gasoline.

Circles indicate excellent permeation inhibiting ability to inhibit the permeation of the regular gasoline.

Triangles indicate excellent permeation inhibiting ability to inhibit the permeation of the alcohol-blended gasoline.

It is known that the respective permeation inhibiting abilities of the laminated tubes having the low-permeability resin layers including one layer of the LCP are high regardless of the type of the test liquid. The laminated tubes having one layer of EVOH resin have a high permeation inhibiting ability with the alcohol-blended gasoline.

It is known that properties of the layer of the EVOH resin having a low permeability to regular gasoline and susceptible to alcohol can be complemented by forming one of the two layers, preferably, the fourth layer, of the ETFE resin and forming the other layer of the PPS resin, the PBN resin or the LCP.

It is known that the permeability to all the types of fuel of the laminated tube can be lowered by using the layer of the EVOH resin susceptible to the alcohol-blended gasoline and resistant to the regular gasoline in combination with the layer of the PPS resin or the LCP. Combination of the layer of the PPS resin and the layer of the LCP was the best for enhancing the permeation inhibiting abilities of the laminated tubes with the test liquids.

As apparent from the foregoing description, according to the present invention, the laminated tube of the present invention has an exceedingly high permeation inhibiting ability unparalleled by the conventional laminated tubes. The permeation inhibiting ability with a specific fuel can be improved and the low permeation inhibiting ability of the resin layer with a specific fuel can be complemented, the laminated tube can be provided with conductivity and the permeation inhibiting ability of the laminated tube can be enhanced by using low-permeability resin layers in combination.

## Claims

1. A laminated tube comprising a plurality of resin layers respectively formed of thermoplastic resins;
wherein the two or more resin layers among the plurality of resin layers are low-permeability resin layers formed respectively of different low-permeability resins.

2. A laminated tube according to claim 1, wherein the low-permeability resin forming each of the low-permeability resin layers is an ethylene tetrafluoroethylene resin (ETFE resin), a liquid crystallized polymer (LCP), a polyphenylene sulfide resin (PPS resin), an ethylene-vinyl alcohol resin (EVOH resin) or a polybutylene naphthalate resin (PBN resin).

3. The laminated tube according to claim 1, wherein one of the low-permeability resin layers is formed of a mixed resin prepared by mixing powder of one of thermoplastic resins including ethylene tetrafluoroethylene resins (ETFE resins), liquid crystallized polymers (LCPs), polyphenylene sulfide resins (PPS resins), ethylene-vinyl alcohol resins (EVOH resins) and polybutylene naphthalate resins (PBN resins), and another one of those thermoplastic resins.

4. A laminated tube comprising a plurality of resin layers respectively formed of thermoplastic resins;
wherein the two or more resin layers among the plurality of resin layers are low-permeability resin layers, and the thermoplastic resin forming one of the two or more low-permeability resin layers is an ethylene tetrafluoroethylene resin (ETFE resin), a liquid crystallized polymer (LCP), a polyphenylene sulfide resin (PPS resin), an ethylene-vinyl alcohol resin (EVOH resin) or a polybutylene naphthalate resin (PBN resin).

5. The laminated tube according to claim 4, wherein the innermost layer among the plurality of resin layers is a low-permeability resin layer formed of an ethylene tetrafluoroethylene resin (ETFE resin).

6. A laminated tube comprising a plurality of resin layers respectively formed of thermoplastic resins;
wherein the two resin layers are low-permeability resin layers, and the two low-permeability layers are:
a) a low-permeability resin layer of an ethylene tetrafluoroethylene resin (ETFE resin) and a low-permeability resin layer of an ethylene-vinyl alcohol resin (EVOH resin),
b) a low-permeability resin layer of an ethylene tetrafluoroethylene resin (ETFE resin) and a low-permeability resin layer of a polyphenylene sulfide resin (PPS resin),
c) a low-permeability resin layer of a liquid crystallized polymer (LCP) and a low-permeability resin layer of an ethylene tetrafluoroethylene resin (ETFE resin),
d) a low-permeability resin layer of a polybutylene naphthalate resin (PBN resin) and a low-permeability resin layer of an ethylene tetrafluoroethylene resin (ETFE resin) or
e) a low-permeability resin layer of a polybutylene naphthalate resin (PBN resin) and a low-permeability resin layer of a polyphenylene sulfide resin (PPS resin).

7. The laminated tube according to any one of claims 1 to 6, wherein the innermost one of the low-permeability resin layers contains a conductive material.
